Europäisches Patentamt

European Patent Office

Office européen des brevets

(19)

(11) Veröffentlichungsnummer : **0 099 875 B1**

# EUROPÄISCHE PATENTSCHRIFT

(12)

(45) Veröffentlichungstag der Patentschrift :
06.05.87

(51) Int. Cl.⁴ : **F 24 H 1/18, F 24 D 11/02**

(21) Anmeldenummer : **83890117.1**

(22) Anmeldetag : **15.07.83**

(54) **Vorrichtung zur Erwärmung von Heizungswasser und von Brauchwasser.**

(30) Priorität : **21.07.82 AT 2825/82**

(43) Veröffentlichungstag der Anmeldung :
**01.02.84 Patentblatt 84/05**

(45) Bekanntmachung des Hinweises auf die Patenterteilung : **06.05.87 Patentblatt 87/19**

(84) Benannte Vertragsstaaten :
**AT BE CH DE FR IT LI NL SE**

(56) Entgegenhaltungen :
**BE-A-   565 337**
**CH-A-   175 590**
**DE-A- 2 638 834**
**DE-A- 2 918 256**
**DE-A- 2 926 954**
**FR-A- 2 468 084**

(73) Patentinhaber : **Schwarz, Alois**
**Salzburger Strasse 26**
**A-6380 St. Johann in Tirol (AT)**

(72) Erfinder : **Schwarz, Alois**
**Salzburger Strasse 26**
**A-6380 St. Johann in Tirol (AT)**

(74) Vertreter : **Atzwanger, Richard Dipl.Ing.**
**Mariahilfer Strasse 1c**
**A-1060 Wien (AT)**

## Beschreibung

Die Erfindung betrifft eine Vorrichtung zur Erwärmung von Heizungswasser und von Brauchwasser mit einem Heizkessel, einem Boiler, einer von einer Wärmequelle gespeisten Wärmepumpe, von welcher Wärme an einen Wärmetauscher geliefert wird, und mit einem den Heizkessel, den Boiler, die Wärmepumpe und den Wärmetauscher verbindenden, eine Pumpe und Steuerventile enthaltenden Leitungssystem.

Der Erfindung liegt die Aufgabe zugrunde, eine Vorrichtung zu schaffen, mittels welcher einerseits warmes Wasser für einen Heizungskreislauf und andererseits in einem Boiler warmes Brauchwasser erzeugt werden kann. Die Erwärmung des Heizungswassers und des Brauchwassers erfolgt in erster Linie durch eine Wärmepumpe. Soferne jedoch von der Wärmepumpe keine Energie zur Verfügung gestellt wird, soll diese von einem Heizungskessel geliefert werden, durch den gleichfalls nicht nur das Heizungswasser sondern auch das Brauchwasser erwärmt wird.

Der Erfindung liegt demnach die Aufgabe zugrunde, eine Vorrichtung zu schaffen, durch welche der Kreislauf einer Wärmepumpe einerseits und der Kreislauf einer Heizungsanlage mit einem Heizungskessel andererseits so miteinander kombiniert sind, daß von der Wärmepumpe und vom Heizungskessel wahlweise oder in Kombination sowohl dem Heizungskreislauf als auch dem Boiler Wärme zu-führbar ist. Durch die erfindungsgemäße Vorrichtung soll dabei ein bekannten Vorrichtungen mit Wärmepumpen anhaftender schwerwiegender Mangel, der nachstehend erläutert ist, vermieden werden :

Im Kreislauf bekannter Wärmepumpen befindet sich ein Kältemittel, das unter den Bezeichnungen GLYKOL und FRIGEN vertrieben wird, durch welches zwar den technischen Anforderungen hinsichtlich der Wärmeübertragung, welche an dieses gestellt werden, in optimaler Weise entsprochen wird, das jedoch insoferne äußerst nachteilig ist, als es extem giftig ist. Soferne dieses Kältemittel infolge einer Leckage in der Verrohrung in den Kreislauf für das Brauchwasser eindringt, besteht, sobald dieses Brauchwasser als Trinkwasser benützt wird, die große Gefahr von Vergiftungen. Bei bekannten Vorrichtungen ist der im Boiler zur Erzeugung des Brauchwassers, das auch als Trinkwasser dienen kann, vorgesehene Wärmetauscher als einfaches Rohr ausgebildet, das an die Wärmepumpe angeschlossen ist und das vom Kältemittel durchströmt ist. Soferne in diesem Wärmetauscher eine Leckage eintritt, kann somit das Kältemittel direkt in das im Boiler enthaltene Brauchwasser übertreten. Dieser Nachteil soll durch eine erfindungsgemäße Vorrichtung vermieden werden.

Aus der DE-A-26 38 834 ist eine Vorrichtung bekannt, die dazu dient, zur Verfügung stehende Solarenergie in einen Kreislauf einerseits zur Erwärmung von Brauchwasser und andererseits zur Erwärmung von Heizungswasser einzuspeisen. Hierfür weist die Anlage einen als Flachkollektor ausgebildeten Sonnenkollektor auf, der mittels einer Leitung an einen ersten Wärmetauscher angeschlossen ist, wobei die Förderung der in diesem Kollektorkreislauf befindlichen Flüssigkeit mittels einer Pumpe bewirkt wird. Im Wärmetauscher wird die Wärme an einen in diesem befindlichen Verdampfer einer Wärmepumpe, die weiters einen Kälteverdichter und eine Drosseleinrichtung enthält, abgegeben. Die von der Wärmepumpe auf einen höheren Temperaturwert angehobene Wärme wird von dessen Kondensator in einem zweiten Wärmetauscher an eine Rohrleitung übertragen, in welcher mittels einer Pumpe Wasser in einen Speicher für Brauchwasser und in einen Heizkessel zur Erwärmung von Wasser für einen Heizungskreis gefördert wird.

Diese bekannte Vorrichtung weist weiters einen Zweig auf, der an die zum Heizkessel und zum Speicher geführte, Brauchwasser enthaltende Leitung angeschlossen ist und der über ein Regelventil gleichfalls durch den ersten Wärmetauscher geführt ist. Der erste Wärmetauscher besteht aus einem topfartigen Gehäuse, das mit einem Anschluß für den ergänzenden Zweig der zum Speicher und zum Heizkessel führenden Leitung ausgebildet ist und dessen Deckel von einem Doppelmantelrohr durchsetzt ist, das im Inneren des Gehäuses schraubenförmig verläuft. Das Innenrohr dieses Doppelmantelrohres enthält ein Kältemittel, wogegen sich das Außenrohr im Solarkreislauf befindet.

Mittels dieser bekannten Vorrichtung wird durch die Wärmepumpe, die mit Solarwärme gespeist wird, im ersten Wärmetauscher Brauchwasser erwärmt, durch das zudem im Heizkessel befindliche Heizungswasser erwärmt wird. Soferne durch den Solarkreislauf an den ersten Wärmetauscher ein so hohes Wärmepotential geliefert wird, daß der Einsatz der Wärmepumpe nicht erforderlich ist, kann erwärmtes Wasser über den ergänzenden Zweig direkt in den Speicher für das Brauchwasser gefördert werden.

Da der erste Wärmetauscher durch ein Doppelmantelrohr gebildet ist, in dessen Innenrohr sich Kältemittel befindet und dessen Außenrohr von einem Medium durchströmt ist, das sich in einem vom Kreislauf für das Brauchwasser gesonderten Kreislauf befindet, besteht auch bei diesem deshalb keine Gefahr, daß Kältemittel direkt in das Brauchwasser übertritt, da der Kreislauf des Kältemittels durch den Solarkreislauf getrennt ist. Dessen ungeachtet wird jedoch auch bei dieser Vorrichtung diese Gefahr deshalb nicht vermieden, weil das Kältemittel im zweiten Wärmetauscher direkt in den Kreislauf für das Brauchwasser übertreten kann. Ein weiterer Nachteil dieser bekannten Vorrichtung besteht darin, daß der im zweiten Wärmetauscher befindliche Kondensator der Wärmepumpe durch über 55 °C ansteigende Temperaturen überlastet und dadurch beschädigt werden kann.

Der Erfindung liegt demnach noch die Aufgabe zugrunde, eine Vorrichtung zu schaffen, bei welcher ein Übertritt von giftigem Kältemittel in den Kreislauf des Brauchwassers mit Sicherheit vermieden wird und bei welcher eine Beschädigung des Wärmetauschers infolge Überlastung dadurch ausgeschlossen wird, daß ein Pufferspeicher für die von der Wärmepumpe angeförderte Wärme vorgesehen ist, wobei dessen ungeachtet durch gute Wärmeübertragung ein hoher Wirkungsgrad gewährleistet ist.

Ergänzend wird darauf verwiesen, daß auch aus der BE-A-565 337 und aus der DE-A-29 18 256 Wärmetauscher bekannt sind, die mit Doppelmantelrohren ausgebildet sind. Diese Literaturstellen offenbaren jedoch nicht Vorrichtungen der vorstehend erwähnten Art.

Die vorstehend erläuterten Aufgaben werden erfindungsgemäß dadurch gelöst, daß der Wärmetauscher, der — in an sich bekannter Weise — durch ein Doppelmantelrohr gebildet ist, innerhalb des Boilers für das Brauchwasser angeordnet ist, wobei das Innenrohr des Doppelmantelrohres, das vom Kältemittel durchströmt ist, an die Wärmepumpe und dessen Aussenrohr an den Heizungskreislauf angeschlossen ist sowie daß die Förderung der in den beiden Rohren befindlichen Medien im Gegenstrom erfolgt. Dadurch daß der Kreislauf des Kältemittels durch den Heizungskreislauf vom Brauchwasser getrennt ist, wird ein Übertritt von Kältemittel in das Brauchwasser mit Sicherheit vermieden. Dadurch weiters, daß das Doppelmantelrohr innerhalb des Boilers angeordnet ist, dient dieser als Pufferspeicher, wodurch die Schalthäufigkeit der Wärmepumpe herabgesetzt wird.

Vorzugsweise ist im Kreislauf des Außenrohres ein Dreiwegventil angeordnet, durch das entweder der Kreislauf des Außenrohres kurz geschlossen ist oder dieser über mindestens einen weiteren Kreis, in dem vorzugsweise Radiatoren angeordnet sind, geführt ist. Hierdurch kann auch eine Speisung von Radiatoren mit Wärme erfolgen. Da weiters vorzugsweise im Kreislauf des Außenrohres ein weiteres Dreiwegventil angeordnet ist, durch das das Wasser durch den Heizungskessel führbar ist, kann die Aufheizung des gesamten Systems auch durch den Heizungskessel bewirkt werden.

Um die Einspeisung von Wärme auch unabhängig von der Wärmepumpe zu bewirken, kann im Boiler eine weitere Heizung, wie eine elektrische Heizpatrone oder eine von einer Solaranlage gespeiste Heizwendel, angeordnet sein.

Vorzugsweise ist der freie Querschnitt des äußeren Rohres des Doppelmantelrohres mindestens ebenso groß, vorzugsweise doppelt so groß, wie der freie Querschnitt des inneren Rohres des Doppelmantelrohres. Soferne schließlich das innere Rohr durch längsverlaufende Wände in mehrere Kanäle unterteilt ist, die an unterschiedliche Wärmequellen anschließbar sind, kann in den Boiler über voneinander getrennte Wärmequellen Wärme eingespeist werden.

Eine erfindungsgemäße Vorrichtung ist nachstehend anhand eines in der Zeichnung dargestellten Ausführungsbeispieles näher erläutert. Es zeigen:

Figur 1 eine erfindungsgemäße Vorrichtung in schematischer Darstellung,

Figur 2 ein Detail der Fig. 1, in vergrößerter Darstellung,
und

Figur 3 ein weiteres Detail, im Schnitt und in vergrößerter Darstellung.

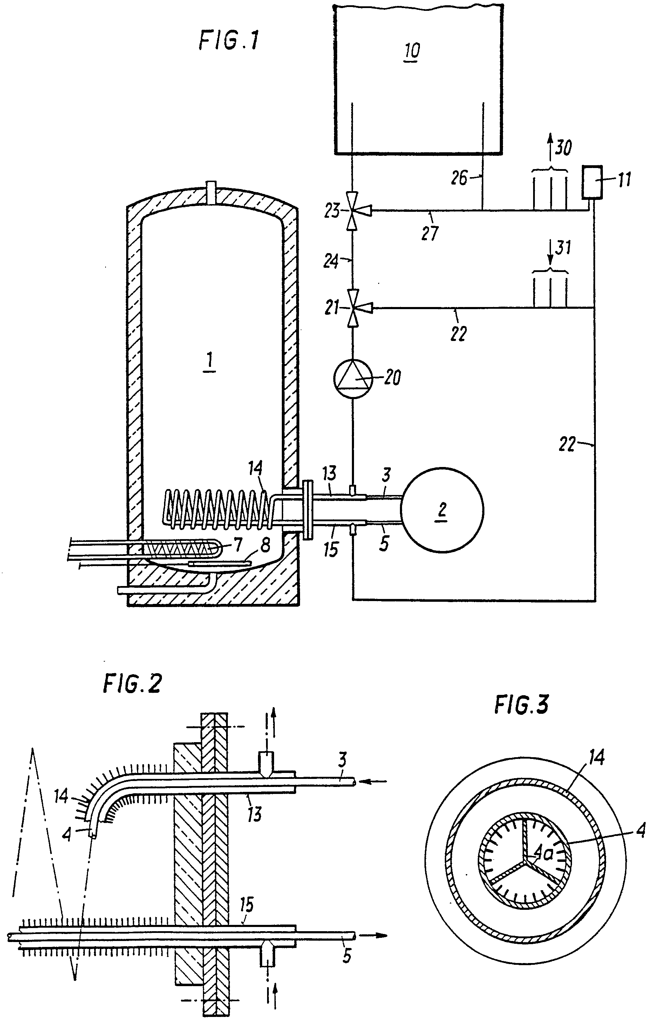

In Fig. 1 der Zeichnung ist ein Boiler 1 dargestellt, der mittels einer Wärmepumpe 2 mit Wärme speisbar ist. In der Wärmepumpe 2 wird ein Kältemittel, das im Handel unter den Bezeichnungen FRIGEN oder GLYKOL erhältlich ist, erwärmt, über eine Leitung 3 zu einem im Boiler 1 befindlichen Wärmetauscher 4, 14 geleitet und, nachdem es die Wärme abgegeben hat, über eine Leitung 5 zur Wärmepumpe 2 zurückgeführt. Im Boiler 1 befindet sich Brauchwasser.

Die Vorlaufleitung 3 und die Rücklaufleitung 5 für das Kältemittel sind von Außenrohren 13 und 15 umgeben. Das Außenrohr 13 ist über eine Pumpe 20, ein erstes Dreiwegeventil 21 und über eine kurze Leitung 22 zum Außenrohr 15 zurückgeführt. Der dritte Anschluß des ersten Dreiwegeventils 21 ist über eine Leitung 24 zu einem zweiten Dreiwegeventil 23 geführt, dessen einer Anschluß zu einem Heizkessel 10 geführt ist. An den Heizkessel 10 ist eine Leitung 26 angeschlossen, die mindestens einen Vorlauf 30 für ein Heizungssystem speist. Die Rücklaufleitungen 31 münden in die Leitung 22. Durch den zweiten Anschluß des Dreiwegeventiles 23 ist der Heizkessel 10 über eine Leitung 27 kurzgeschlossen. Im System befindet sich weiters ein Entlastungsregister 11. Im Boiler 1 können sich weiters eine Heizwendel 7 einer Solarheizung und eine elektrische Heizpatrone 8 befinden. Wie weiters aus Fig. 3 ersichtlich ist, kann das Innenrohr 4 des Wärmetauschers durch Innenwände 4a in Kanäle unterteilt sein. Zudem ist die Innenfläche des Innenrohres 4 mit Profilierungen, z. B. Rippen 4b, ausgebildet.

Die Wirkungsweise der vorstehend beschriebenen Vorrichtungen ist wie folgt:

Von der Wärmepumpe 2 wird durch die Leitung 3 erwärmtes Kältemittel zum Wärmetauscher 4, 14 gefördert, wo es seine Wärme an das im Boiler 1 befindliche Brauchwasser abgibt und hierauf durch die Leitung 5 zur Wärmepumpe 2 zurückströmt. Durch die Pumpe 20 wird durch die Leitungen 22, 15 und 13 im Gegenstrom Heizungswasser gefördert. Durch diese Flüssigkeitsbewegung wird ein optimaler Wärmeübergang im Wärmetauscher vom inneren Rohr 4 zum äußeren Rohr 14 gewährleistet, wodurch die vom Kältemittel geförderte Wärme mit geringen Verlusten über die gerippten Rohre 4, 14 an das im Boiler 1 befindliche Brauchwasser abgegeben wird.

Solange das im Boiler 1 befindliche Wasser einen Temperaturwert von nicht mehr als z. B. 40 °C aufweist, wird das Heizungswasser mittels der Pumpe 20 über das Dreiwegeventil 21 und die Leitung 22 im kurzen Kreislauf gefördert. Soferne jedoch die Temperatur im Boiler 1 den Wert von 40 °C überschreitet, wird das Dreiwegeventil 21 umgeschaltet, wodurch das in den Leitungen 15 und 13 befindliche Heizungswasser über die Leitung 24 und das Dreiwegeventil 23 entweder über die Leitung 27 oder durch den Heizkessel 10 hindurch zu den Heizungsvorläufen 30 gefördert wird und hierdurch zur Heizung von Räumen verwendet werden kann.

Die Heizung des Boilers 1 kann alternativ auch mittels der Heizwendel 7 der Solarheizung bzw. mittels der Heizpatrone 8 erfolgen. Soferne von der Wärmepumpe 2 keine Wärme abgegeben wird, kann durch die Erwärmung des Wassers im Heizkessel 10 das im Boiler 1 befindliche Wasser erwärmt werden.

Durch das Doppelmantelrohr 4, 14 wird ausgeschlossen, daß Anteile des Kältemittels in das im Boiler 1 befindliche Brauchwasser übertreten können. Durch das im Außenrohr 14 geförderte Heizungswasser wird ein optimaler Wärmeübergang von dem im Innenrohr 4 befindlichen Kältemittel an das im Boiler 1 befindliche Brauchwasser gewährleistet. Zudem stellt das im Boiler 1 enthaltene Brauchwasser einen Ausgleichsspeicher bzw. einen Pufferspeicher dar, wodurch die Schalthäufigkeit der Wärmepumpe 2 herausgesetzt wird.

Durch die geschilderte Kupplung von unterschiedlichsten Wärmequellen kann eine Abgabe von Wärme bzw. ein Wärmeaustausch in jeglicher Richtung erfolgen :

Einerseits kann überschüssige Wärme aus dem Boiler 1 an das Heizungssystem angegeben werden. Andererseits kann der Boiler 1 vom Heizungssystem mit Wärme gespeist werden. Schließlich kann das Heizungssystem von der Wärmepumpe 2 oder von der Solarheizung 7 bzw. von der elektrischen Heizpatrone 8 her mit der erforderlichen Wärme gespeist werden, um ein Einfrieren des Heizungssystems ausschließen zu können.

Die Erfindung besteht demnach allgemein in einem Wärmetauscher bei dem eine sichere Trennung des Kältemittels vom Brauchwasser und ungeachtet dessen ein sehr guter Wärmeübergang zwischen dem Kältemittel und dem Brauchwasser dadurch erzielt wird, daß zwischen diesen Heizungswasser, insbesondere im Gegenstrom, gefördert wird.

Der Querschnitt der Außenrohre muß so groß sein, daß die von der Wärmepumpe 2 erzeugte Wärme bzw. die im Boiler 1 durch die anderen Wärmequellen erzeugte Wärme durch die zum Heizungssystem abgehenden Rohre abführbar ist. Vorzugsweise weisen die Querschnitte der Rohre des Doppelmantelrohres etwa den gleichen lichten Querschnitt auf. Der lichte Querschnitt des äußeren Rohres kann auch doppelt so groß wie der Querschnitt des inneren Rohres sein.

Soferne das Innenrohr 4 durch längsverlaufende Wände 4a in Kanäle unterteilt sind, kann die Zufuhr von Wärme durch diese Kanäle von unterschiedlichen Wärmequellen her erfolgen oder kann die aufgenommene Wärme durch diese einzelnen Kanäle unterschiedlichen Verbrauchern zugeführt werden. Die Unterteilungen in voneinander getrennte Kanäle ist deshalb von Vorteil, da in den einzelnen Kreisen unterschiedliche Arten eines Kältemittels, z. B. eine Flüssigkeit oder ein Gas, eingesetzt werden können. Die Beaufschlagung des in diesen Kanälen strömenden Kältemittels kann durch unterschiedliche Wärmequellen, wie Wärmepumpen, Solarheizung ud. dgl. erfolgen.

**Patentansprüche**

1. Vorrichtung zur Erwärmung von Heizungswasser und von Brauchwasser mit einem Heizkessel (10), einem Boiler (1), einer von einer Wärmequelle gespeisten Wärmepumpe (2), von welcher Wärme an einen Wärmetauscher (4, 14) geliefert wird, und mit einem den Heizkessel (10), den Boiler (1), die Wärmepumpe (2) und den Wärmetauscher (4, 14) verbindenden, eine Pumpe (20) und Steuerventile (21, 23) enthaltenden Leitungssystem (22, 24, 26), dadurch gekennzeichnet, daß der Wärmetauscher (4, 14) der — in an sich bekannter Weise — durch ein Doppelmantelrohr (4, 14) gebildet ist, innerhalb des Boilers (1) für das Brauchwasser angeordnet ist, wobei des Innenrohr (4) des Doppelmantelrohres, das von einem Kältemittel durchströmt ist, an die Wärmepumpe (2) und dessen Aussenrohr (14) an den Heizungskreislauf (30) angeschlossen ist sowie die Förderung der in den beiden Rohren (4, 14) befindlichen Medien im Gegenstrom erfolgt.

2. Vorrichtung nach Anspruch 1, dadurch gekennzeichnet, daß im Kreislauf des Außenrohres (14) ein Dreiwegeventil (21) angeordnet ist, durch das entweder der Kreislauf des Außenrohres (14) kurz geschlossen ist oder dieser über mindestens einen weiteren Kreis (30), in dem vorzugsweise Radiatoren angeordnet sind, geschlossen ist.

3. Vorrichtung nach einem der Ansprüche 1 und 2, dadurch gekennzeichnet, daß im Kreislauf des Außenrohres (14) ein weiteres Dreiwegeventil (23) angeordnet ist, durch das das Wasser durch den Heizungskessel (10) führbar ist.

4. Vorrichtung nach einem der Ansprüche 1 bis 3, dadurch gekennzeichnet, daß im Boiler (1) in an sich bekannter Weise mindestens eine weitere Heizung, wie eine elektrische Heizpatrone (8) oder eine von einer Solaranlage gespeiste Heizwendel (7), angeordnet ist.

5. Vorrichtung nach einem der Ansprüche 1 bis 4, dadurch gekennzeichnet, daß der freie Querschnitt des äußeren Rohres (14) des Doppelmantelrohres (4, 14) mindestens ebenso groß, vorzugsweise doppelt so groß, ist, wie der freie Querschnitt des inneren Rohres (4) des Doppelmantelrohres (4, 14).

6. Vorrichtung nach einem der Ansprüche 1 bis 5, dadurch gekennzeichnet, daß das Innenrohr (4) durch längsverlaufende Wände (4a) in mehrere Kanäle unterteilt sind, die an unterschiedliche Wärmequellen anschließbar sind.

## Claims

1. A device for heating heating water and process water comprising a heating vessel (10), a boiler (1), a heat pump (2) fed from a heat source, from which heat pump heat is supplied to a heat exchanger (4, 14), and a pipe system (22, 24, 26) connecting the heating vessel (10), the boiler (1), the heat pump (2) and the heat exchanger (4, 14) and containing a pump (20) and control valves (21, 23), characterized in that the heat exchanger (4, 14), which is formed, in a manner known per se, of a double-walled pipe (4, 14), is arranged inside the boiler (1) for the process water, the inner pipe (4) of the double-walled pipe, which has a refrigerant flowing through it, being connected to the heat pump (2) and its outer pipe (14) being connected to the heating circuit (30) and the media located in the two pipes (4, 14) being conveyed in countercurrent.

2. A device according to claim 1, characterized in that in the circuit of the outer pipe (14) there is arranged a three-way valve (21) by means of which the circuit of the outer pipe (14) is either short-circuited or this circuit is closed by means of at least one other circuit (30), in which radiators are preferably arranged.

3. A device according to claim 1 or claim 2, characterized in that another three-way valve (23) is arranged in the circuit of the outer pipe (14), by means of which the water can be conducted through the heating vessel (10).

4. A device according to any one of claims 1 to 3, characterized in that in the boiler (1) at least one other heating device, such as an electric cartridge heater (8) or a heating coil (7) supplied from a solar installation, is arranged in a way known per se.

5. A device according to any one of claims 1 to 4, characterized in that the free cross section of the outer pipe (14) of the double-walled pipe (4, 14) is at least as big, and preferably twice as big, as the free cross section of the inner pipe (4) of the double-walled pipe (4, 14).

6. A device according to any one of claims 1 to 5, characterized in that the inner pipe (4) is subdivided into several channels by longitudinally running walls (4a), which channels can be connected to different heat sources.

## Revendications

1. Dispositif pour la chauffe d'eau de chauffage et d'eau à prélever avec une chaudière de chauffe (10), un ballon d'eau chaude (1), une pompe calorifique (2) qui est alimentée par une source de chaleur et qui fournit de la chaleur à un échangeur de chaleur (4, 14) et avec un système de conduites (22, 24, 26) contenant une pompe (20) et des robinets de commande (21, 23) en reliant la chaudière de chauffe (10), le ballon (1), la pompe calorifique (2) et l'échangeur de chaleur (4, 14), caractérisé en ce que l'échangeur de chaleur (4, 14), — qui d'une façon connue en soi — est constitué par un tube à double enveloppe (4, 14), est disposé à l'intérieur du ballon (1) pour l'eau à prélever, le conduit intérieur (4) du tube à double enveloppe étant traversé par un écoulement d'un fluide froid est raccordé à la pompe calorifique (2) tandis que son conduit extérieur (14) est raccordé au circuit de chauffage (30), les écoulements des deux fluides s'effectuant dans les deux conduits (4, 14) à contre-courant.

2. Dispositif selon la revendication 1, caractérisé en ce que, dans le circuit du conduit extérieur 14, est disposé un robinet à trois voies (21) par lequel le circuit du conduit extérieur (14) est fermé court ou bien se ferme au moins par un parcours plus long (30) dans lequel sont disposés de préférence des radiateurs.

3. Dispositif selon l'une des revendications 1 et 2, caractérisé en ce que dans le circuit du conduit extérieur (14) est disposé un autre robinet à trois voies (23) par lequel l'eau peut s'écouler à travers la chaudière de chauffage (10).

4. Dispositif selon l'une des revendications 1 à 3, caractérisé en ce que, dans le ballon (1), d'une façon connue en soi, est disposé au moins un autre chauffage tel qu'un corps de chauffage électrique (8) ou une source de chaleur (7) alimentée par une installation solaire.

5. Dispositif selon l'une des revendications 1 à 4, caractérisé en ce que la section libre du conduit extérieur (14) du tube à double enveloppe (4, 14) est au moins aussi grande et de préférence deux fois plus grande que la section libre du conduit intérieur (4) du tube à double enveloppe (4, 14).

6. Dispositif selon l'une des revendications 1 à 5, caractérisé en ce que le conduit intérieur (4) est divisé par des parois longitudinales (4a) en plusieurs canaux qui peuvent se raccorder à des sources de chaleur différentes.

**0 099 875**

FIG.1

FIG.2

FIG.3